(19) Europäisches Patentamt / European Patent Office / Office européen des brevets

(11) **EP 3 531 401 B1**

(12) **EUROPEAN PATENT SPECIFICATION**

(45) Date of publication and mention
of the grant of the patent:
**19.10.2022 Bulletin 2022/42**

(21) Application number: **19157873.1**

(22) Date of filing: **18.02.2019**

(51) International Patent Classification (IPC):
*G09C 1/00* *(2006.01)*   *H04L 9/06* *(2006.01)*
*H04L 9/00* *(2022.01)*

(52) Cooperative Patent Classification (CPC):
**G09C 1/00; H04L 9/003; H04L 9/0618;**
H04L 2209/08

(54) **METHOD AND CIRCUIT FOR PERFORMING A SUBSTITUTION OPERATION**

VERFAHREN UND SCHALTUNG ZUR DURCHFÜHRUNG EINES SUBSTITUTIONSVORGANGS

PROCÉDÉ ET CIRCUIT PERMETTANT D'EFFECTUER UNE OPÉRATION DE SUBSTITUTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.02.2018 FR 1851644**

(43) Date of publication of application:
**28.08.2019 Bulletin 2019/35**

(73) Proprietor: **STMICROELECTRONICS (ROUSSET)
SAS
13790 Rousset (FR)**

(72) Inventors:
• **ORDAS, Thomas**
  **83470 POURCIEUX (FR)**
• **LINGE, Yanis**
  **13710 FUVEAU (FR)**

(74) Representative: **Cabinet Beaumont
4, Place Robert Schuman
B.P. 1529
38025 Grenoble Cedex 1 (FR)**

(56) References cited:
FR-A1- 2 985 624     US-A1- 2009 074 181
US-A1- 2011 296 198

## Description

This application claims the priority benefit of French patent application number 18/51644, filed on February 26, 2018, the content of which is hereby incorporated by reference in its entirety to the maximum extent allowable by law.

## FIELD

The present disclosure relates to the field of electronic circuits, and in particular to a device and method for accessing substitution tables during a cryptographic operation.

## BACKGROUND

Substitution tables, also known as S-boxes, define a data substitution operation performed during cryptographic algorithms. The purpose of this data substitution is to obscure the relationship between the secret key and the cipher text, and thus render it harder for the secret key to be discovered.

One technique used by hackers wishing to recover the secret key processed by a cryptographic device is to monitor signals on side channels in order to extract certain information relating, for example, to the power consumption or the timing in the device during the execution of a cryptographic algorithm. The manipulation of the secret key during substitution operations is often targeted by hackers using side channel methods due to the relative visibility of substitution operations.

Some solutions have been proposed providing a limited degree of protection against the use of side channel methods.

Among these solutions, the use of dummy substitution operations is known from FR 2 985 624 A1, US 2009/074181 A1 or PAN J ET AL: "You Cannot Hide behind the Mask: Power Analysis on a Provably Secure S-Box Implementation", 25 August 2009 (2009-08-25), INFORMATION SECURITY APPLICATIONS, SPRINGER BERLIN HEIDELBERG, BERLIN, HEIDELBERG, PAGE(S) 178 - 192.

There is however a need in the art for solutions providing greater protection.

## SUMMARY

It is an aim of embodiments of the present description to at least partially address one or more needs in the prior art.

According to one aspect, there is provided a method according to claim 1.

According to a further aspect, there is provided a cryptographic circuit according to claim 5.

## BRIEF DESCRIPTION OF THE DRAWINGS

The foregoing and other features and advantages will become apparent from the following detailed description of embodiments, given by way of illustration and not limitation with reference to the accompanying drawings, in which:

Figure 1 schematically illustrates a circuit for executing a cryptographic algorithm involving substitution operations according to an example embodiment;
Figure 2 schematically illustrates an S-box according to an example embodiment;
Figure 3 schematically illustrates a cryptographic circuit for performing S-box accesses according to an example embodiment of the present disclosure;
Figure 4 is a timing diagram illustrating an example of signals in the circuit of Figure 3;
Figure 5 schematically illustrates part of an S-box input circuit of Figure 3 in more detail according to an example embodiment of the present disclosure;
Figure 6 schematically illustrates a processing system for performing S-box accesses according to an example embodiment of the present disclosure;
Figure 7 is a flow diagram representing operations in a method of performing an S-box access according to an example embodiment of the present disclosure; and
Figure 8 schematically illustrates a cryptographic device according to an example embodiment of the present disclosure.

## DETAILED DESCRIPTION

Throughout the present disclosure, the term "connected" is used to designate a direct electrical connection between circuit elements, whereas the term "coupled" is used to designate an electrical connection between circuit elements that may be direct, or may be via one or more intermediate elements such as multiplexers, buffers, etc.

Furthermore, throughout the present disclosure, the following terms will be considered to have the following definitions:

"cryptographic algorithm" - any series of operations performed by a device that involves the manipulation of a secret value, such as a secret key, which is to be hidden from the world outside the device. Examples of cryptographic algorithms include algorithms for encrypting or decrypting plaintext/cipher-text based on a secret key, for generating a message authentication code (MAC) or other form of digital signature based on a secret algorithm and/or key, or any other type of secretive operation;
"substitution operation" or "S-box access" - an operation of a cryptographic algorithm in which an output data value is generated based on an input data value using a substitution table, i.e. an S-box. The input and output values may have the same, or a different, number of bits. This operation is for example performed using a lookup table (LUT) stored in a memory, and the values defined in the lookup table may be fixed, or could be updated dynamically;

"real substitution operation" - a substitution operation defined by the cryptographic algorithm that is being executed, which is for example a useful operation in that the result of the substitution will contribute towards the calculation of the output data of the cryptographic algorithm; and

"dummy substitution operation" - a fake or false substitution operation performed in the same manner as a real substitution operation, but which is superfluous as it is performed in addition to the real substitution operations defined by the cryptographic algorithm. While the result of each dummy substitution operation may be stored to memory, it is not useful in that the result serves no purpose in relation with the cryptographic algorithm and can be discarded. As described herein, the dummy substitution operations are for example performed based on random input data.

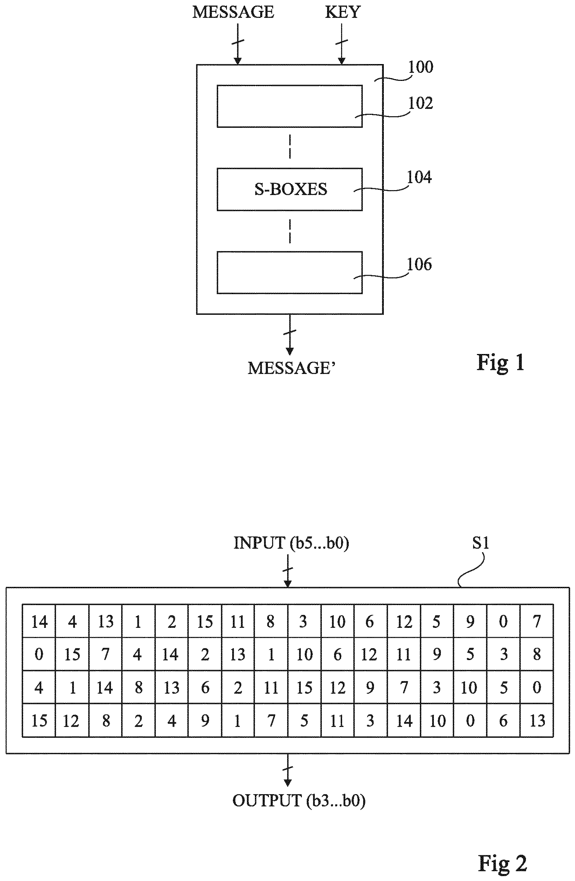

Figure 1 schematically illustrates a cryptographic circuit 100 according to an example embodiment. The circuit 100 for example receives as inputs a message (MESSAGE) to be processed and a secret key (KEY). For example, the message corresponds to plaintext to be encrypted by the circuit 100 using the secret key, to cipher-text to be decrypted by the circuit 100 using the secret key, or to data that is to be signed by the circuit 100 by generating a digital signature, such as a MAC (message authentication code) based on the key.

The circuit 100 comprises a series of hardware modules implementing various operations 102, 104, 106 on the message and key in order to generate an output message (MESSAGE') corresponding to cipher-text, plaintext and/or a digital signature. In the example of Figure 1, the operation 104 corresponds to a substitution operation involving one or more substitution tables (S-BOXES).

Figure 2 schematically illustrates an example of an S-box used during the DES (data encryption standard) algorithm. As known to those skilled in the art, the DES encryption algorithm involves 8 S-boxes S1 to S8, each of which is unique. Figure 2 illustrates the DES S-box S1.

An S-box access according to the DES encryption algorithm involves inputting 6 input bits (INPUT) b5 to b0, and outputting 4 output bits (OUTPUT) b3 to b0. The S-box S1 is in the form of a lookup table having 16 columns and 4 rows. The bits b5 and b0 of the input value are for example used to select a row of the table, and the bits b4 to b1 of the input value are for example used to select a column of the table. The 4-bit value stored in the selected row and column forms the output value of the S-box.

Of course Figure 2 illustrates only one example of an S-box, and the principles described in the present disclosure could be applied to any type of S-box in which input data is substituted in order to generate output data based on a table of stored values.

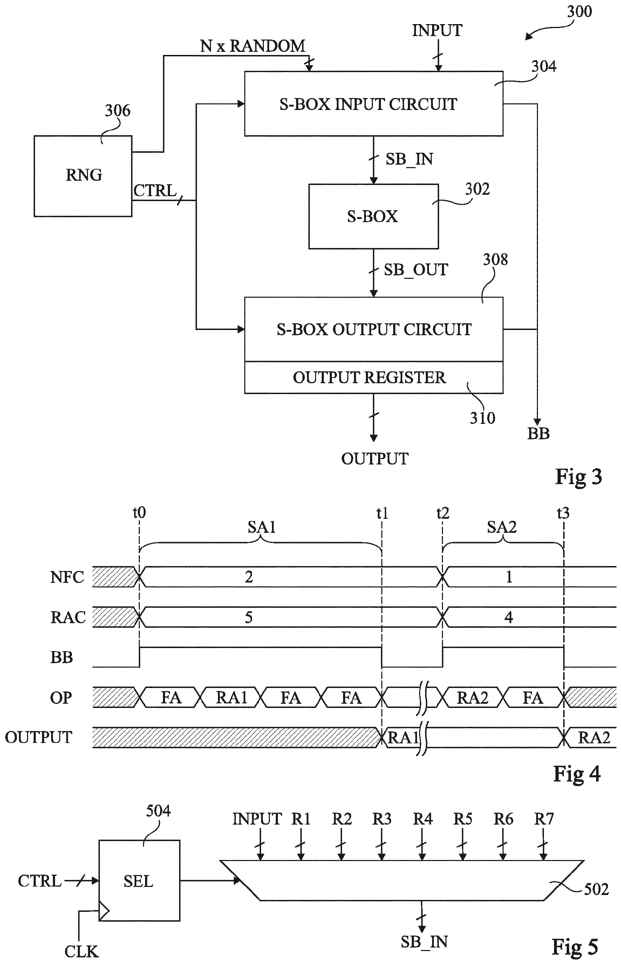

Figure 3 schematically illustrates a cryptographic circuit 300 for implementing S-box access operations according to an example embodiment of the present disclosure. The circuit 300 for example forms part of the circuit 100 of Figure 1.

The circuit 300 comprises an S-box 302 receiving input data SB_IN, and providing output data SB_OUT. The S-box 302 is for example implemented by a non-volatile memory, in which the input data SB_IN provides an address input to the memory, and the output data SB_OUT corresponds to the data value stored at the addressed location in the memory.

The S-box 302 for example corresponds to the S-box S1 of Figure 2, or to any other S-box of the DES encryption standard. Alternatively, the S-box 302 could correspond to an S-box used in the TDES (Triple DES), AES (advanced encryption standard) or SM4 (formerly known as SMS4) encryption standards, or in any other encryption standard.

The circuit 300 further comprises an S-box input circuit (S-BOX INPUT CIRCUIT) 304 receiving an input value INPUT corresponding to a real substitution operation to be performed in relation with a cryptographic algorithm. For example, the input value INPUT is the result of an operation performed on the message data and the key data of Figure 1.

The S-box input circuit 304 also receives N random input values (N x RANDOM), and a control signal CTRL, from a random number generator (RNG) 306. The generator 306 is for example a pseudo-random number generator or a true random number generator.

The circuit 300 further comprises an S-box output circuit (S-BOX OUTPUT CIRCUIT) 308 that receives the output data SB_OUT from the S-box 302 and also the control signal CTRL from the random number generator 306. The S-box output circuit 308 is for example coupled to an output register (OUTPUT REGISTER) 310, which provides output data OUTPUT representing the result of the S-box access operation. In some embodiments, the input circuit 304 and the output circuit 308 assert a busy bit (BB) to indicate to a host system the periods in which the S-box 302 is occupied.

In operation, for each S-box access operation to be performed in view of a corresponding substitution operation of a cryptographic algorithm, a series of S-box accesses is performed by S-box input circuit 304. Only one of these accesses corresponds to the real S-box access relating to the substitution operation of the cryptographic algorithm. The other one or more S-box accesses correspond to dummy accesses based on the random values provided by the generator 306, the results of which are discarded.

For example, each time an S-box access is to be performed, the real input data value and N random input values are loaded into the S-box input circuit 304, where N is a positive integer for example equal to at least 7 in some embodiments. The control signal CTRL generated by the random number generator 306 for example comprises a value NFC indicating the number of dummy accesses to be implemented, and a value RAC indicating the position of the real access with respect to the dummy accesses.

For example, in one embodiment the value NFC is a 2-bit value, and the value RAC is a 3-bit value. The number NF of dummy S-box accesses in each series of S-box accesses is for example equal to:

$$NF = 2^{NFC} - 1$$

Thus, with the value of NFC being equal to 0, 1, 2 or 3, the number NF of dummy S-box accesses can for example be 0, 1, 3 or 7. Furthermore, the value RAC is for example used to determine the position of the real access by performing a logic AND operation between the 3-bit binary value RAC and a 3-bit binary value representing the number NF.

By randomly generating the value of NFC for each series of S-box accesses, the processing time for each real S-box access will be variable. Thus, as the duration of each S-box access is no longer predictable, the busy bit BB for example indicates to the host processing system the time periods during which the S-box 302 is occupied.

According to some embodiments, the S-box output circuit 308 stores each of the output values SB_OUT from the S-box 302 during each access operation to the output register 310. Furthermore, the circuit 308 for example selects the real output value to form the output value OUTPUT of the register 310 based on the control signal CTRL. In particular, the value NFC indicates the number of dummy output values provided by the S-box 302, and the value RAC indicates the position of the real output value with respect to the dummy output values.

Operation of the circuit of Figure 3 will now be described in more detail with reference to Figure 4.

Figure 4 is a timing diagram representing examples of the signals NFC, RAC, BB, of S-box access operations OP, and of the output value OUTPUT, during a series of accesses SA1 and SA2 using the circuit of Figure 3.

In the example of Figure 4, during the series of accesses SA1, the value of NFC is randomly generated to equal 2, and the value of RAC is randomly generated to equal 5. Thus the number NF of dummy S-box operations in the series SA1 is equal to 3. The total number of S-box accesses in any series is equal to NF+1, and the result of the operation NF*RAC is for example a 3-bit value that may assume a value between 0 and NF, where 0 represents the first access of the series, and NF represents the last access of the series. Thus, in the example of the series of accesses SA1, the position of the real access operation is equal to a logic AND applied bit by bit to the values "011" and "101", which gives "001", corresponding to the second access of the series.

The busy bit BB for example goes high at a time t0 at the start of the series of access operations SA1, which comprises four S-box accesses corresponding, in sequence, to: a dummy access FA; a real access RA1; a dummy access FA; and a dummy access FA. The busy bit BB then for example goes low at the time t1 following the last access, and the output value OUTPUT becomes equal to the result of the real access RA1 a short time later.

During the series of S-box accesses SA2, the value of NFC is randomly generated to equal 1, and the value of RAC is randomly generated to equal 4. Thus the number NF of dummy S-box operations in the series SA2 is equal to 1, and the position of the real access operation in the series SA2 is equal to a logic AND applied bit by bit to the values "001" and "100", which gives "000", corresponding to the first access of the series.

The busy bit BB for example goes high at a time t2 at the start of the series of access operations SA2, which comprises two S-box accesses corresponding, in sequence, to: a real access RA2; and a dummy access FA. The busy bit BB then for example goes low at the time t3 following the last access, and the output value OUTPUT becomes equal to the result of the real access RA2 a short time later.

Figure 5 schematically illustrates part of the S-box input circuit 304 of Figure 3 in more detail according to an example embodiment. The circuit 304 for example comprises a multiplexer 502 having N+1 inputs for receiving the N random values from the random number generator 306, and the real input value INPUT. In the example of Figure 5, N is equal to 7, and the 7 random values are labelled R1 to R7.

The circuit 304 also for example comprises a selection circuit (SEL) 504 that generates a selection signal for controlling the multiplexer 502 based on the control signal CTRL from the random number generator 306. The selection circuit 504 for example receives a clock signal CLK indicating the period of each access operation such that the selection signal can be updated at the appropriate time. As indicated above, depending on the number of dummy access operations in a given series of S-box accesses, the number of these random input values used during this series of accesses will vary between none and N. The random values R1 to R7 are for example refreshed after each series of S-box accesses, in other words each time the input data INPUT is updated.

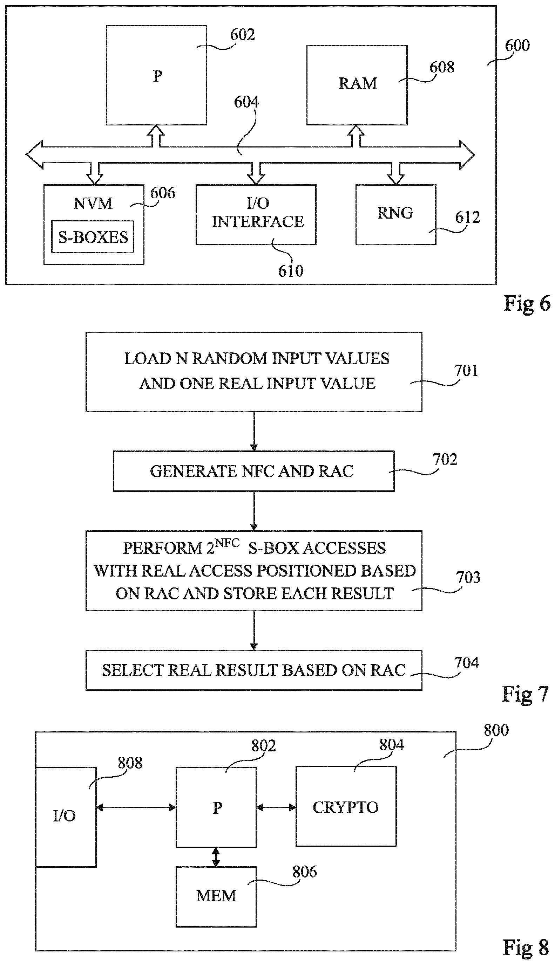

The example of Figures 3 and 5 corresponds to a hardware implementation. In alternative embodiments, the method of performing an S-box access described herein could be implemented in software, as will now be described in more detail with reference to Figures 6 and 7.

Figure 6 schematically illustrates a processing system 600 according to an example embodiment of the present disclosure. The system 600 for example comprises a processing device (P) 602 coupled via a bus 604 to a memory 606 storing one or more S-boxes (S-BOXES) . The memory 606 is for example a non-volatile memory (NVM). The system 600 also for example comprises, coupled to the bus 604, a volatile memory 608, which is for example a RAM (random access memory), an input/output interface (I/O INTERFACE) 610, and a random number generator (RNG) 612. The processing device 602 for example comprises one or more processing cores under control of instructions stored in an instruction memory, for example the memory 606 and/or 608.

Figure 7 is a flow diagram illustrating operations in a method of performing an S-box access according to an example embodiment of the present disclosure, and using the processing system of Figure 6.

In an operation 701, N random input values and one real input value are for example loaded into the working memory of the processing device 602, the working memory for example corresponding to the RAM 608. The random values are for example generated by the random number generator 612, whereas the real input value is for example a result, stored to the RAM 608, of a previous operation performed by the processing device 602 involving a secret key.

In an operation 702, the random values NFC and RAC are generated, for example based on random values provided by the generator 612. These values are for example stored in the RAM 608.

In an operation 703, the processing device 602 performs $2^{NFC}$ S-box accesses, wherein one of these accesses corresponds to a real access based on the real input value, and $2^{NFC}$ - 1 of these accesses correspond to dummy accesses, and wherein the real access is positioned with respect to the dummy accesses based on the value RAC. Each access is for example performed by addressing the non-volatile memory 606, and in particular a lookup table stored in the non-volatile memory 606. The result of each access is stored to memory, such as to the RAM 608.

In operation 704, the result corresponding to the real access is selected to be used in the cryptographic algorithm, based on the random values NFC and RAC. For example, the processing device 602 selects in the RAM 608, based on the values of the random values NFC and RAC, an address corresponding to the storage location of the result of the real substitution operation.

Figure 8 schematically illustrates a cryptographic device 800 according to an example embodiment.

The device 800 for example comprises a processing device (P) 802 corresponding to the host processor of the cryptographic device 800. The processing device 802 is for example in communication with a cryptographic circuit 804 (CRYPTO), which for example corresponds to the circuit 300 of Figure 3, or to some or all of the components of the processing system 600. The cryptographic device 800 also for example comprises a memory (MEM) 806 and an input/output interface (I/O) 808 in communication with processing device 802.

The device 800 for example corresponds to an integrated circuit card (often known as a "smart card"), portable electronics device or other type of electronics device in which a cryptographic function is to be realised. In some embodiments, the input/output interface 808 may correspond to an NFC (near-field communication) interface.

An advantage of the embodiments described herein is that the discovery of a secret key manipulated during substitution operations of a cryptographic algorithm using side channel methods can be rendered considerably more difficult. Indeed, by performing dummy accesses and positioning the real S-box access at a random position with respect to the dummy S-box accesses, this creates a dissymmetry of the leakages during each real S-box access, and it becomes very difficult for a meaningful correlation to be determined between side channel signals during the S-box accesses and the value of the secret key. Furthermore, the discovery of the secret key can be rendered even more difficult by additionally randomising the number of dummy substitution operations performed for each real substitution operation.

An advantage of the hardware implementation of Figures 3 and 5 is that switching between dummy and real S-box accesses can be performed relatively rapidly, leading to a relatively small time overhead for the additional S-box accesses.

Having thus described at least one illustrative embodiment, various alterations, modifications and improvements will readily occur to those skilled in the art. For example, it will be apparent to those skilled in the art that the circuit of Figure 5 implementing the S-box input circuit is merely one example, and that many alternative implementations would be possible.

Furthermore, while an example has been provided in which the values NFC and RAC have respectively 2 and 3 bits, it will be apparent to those skilled in the art that these values could have a different number of bits depending on the value of N.

Furthermore, while embodiments have been described based on a single S-box, certain cryptographic algorithms, such as DES, use a plurality of S-boxes in parallel. The embodiments described herein could also be applied to each of a plurality of S-boxes operating in parallel.

Furthermore, it will be apparent to those skilled in the art that the various features described in relation with the embodiments of Figures 3 and 6 could be combined, in alternative embodiments, in any combination. For example, it would be possible to implement the S-box access method of the present disclosure using a combination of hardware and software.

## Claims

1. A method of implementing, by a cryptographic circuit (300, 600), a substitution operation of a cryptographic algorithm, the method comprising:

   performing, for each substitution operation of the cryptographic algorithm, a series of consecutive substitution operations of which:

   one is a real substitution operation corresponding to the substitution operation of the cryptographic algorithm; and one or more others are dummy substitution operations, wherein the position of the real substitution operation among the one or more dummy substitution operations in each of said series is selected randomly, wherein performing each series of consecutive substitution operations comprises:

        generating a first random value (RAC);
   loading a real input value and m-1 random input values, where m-1 is a positive integer;
   supplying, on consecutive S-box access operations, said real input value and the m-1 random input values to an S-box (302, 606), wherein: m is the number of said consecutive substitution operations of which m-1 are dummy substitution operations; m is an integer selected randomly for each series; and the order that the real input value is supplied with respect to m-1 random input values is selected based on the first random value (RAC); and
   for each series of substitution operations, storing an output value (SB OUT) of each substitution operation, and selecting, among the stored output values, the output value corresponding to said real substitution operation based on said first random value (RAC).

2. The method of claim 1, wherein each substitution operation comprises addressing a memory location of a memory (302, 606) based on input data (SB_IN) and reading a data value at said memory location to provide output data (SB_OUT).

3. The method of claim 1 or 2, further comprising generating a second random value (NFC) for a first series of substitution operations, and using the second random value (NFC) to select the number m of substitution operations in said first series.

4. A non-transitory storage medium storing a computer program configured, when executed by a processing device (602), to implement the method of any of claims 1 to 3.

5. A cryptographic circuit comprising:

        a memory circuit (302, 606) storing a substitution table (S-BOXES) for implementing a substitution operation of a cryptographic algorithm;
   one or more circuits (304, 602) configured to perform, for each substitution operation of the cryptographic algorithm, a series of consecutive substitution operations using said substitution table (S-BOX), each series of consecutive substitution operations comprising:

            a real substitution operation corresponding to the substitution operation of the cryptographic algorithm; and
   one or more dummy substitution operations, wherein the one or more circuits are configured to randomly select the position of the real substitution operation among the one or more dummy substitution operations in each of said series; and

        a random number generator (306, 612) configured to generate, for each of said series, a first random value (RAC) for randomly selecting the position of the real substitution operation among the dummy substitution operations, wherein the one or more circuits (304, 602) is configured to perform each series of consecutive substitution operations by:

            loading a real input value and m-1 random input values, where m-1 is a positive integer; and
   supplying, on consecutive S-box access operations, said real input value and the m-1 random input values to an S-box (302, 606), wherein: m is the number of said consecutive substitution operations of which m-1 are dummy substitution operations; m is an integer selected randomly for each series; and the order that the real input value is supplied with respect to m-1 random input values is selected based on the first random value (RAC); and

        for each series of substitution operations, storing an output value (SB OUT) of each substitution operation, and selecting, among the stored output values, the output value corresponding to said real substitution operation based on said first random value (RAC).

6. The cryptographic circuit of claim 5, wherein the random number generator (306, 612) is further configured to generate, for each of said series, a second random value (NFC) for randomly selecting the number m of substitution operations.

7. The cryptographic circuit claim 5 or 6, further comprising a memory (310, 608) for storing a result of the substitution operations of each of said series.

8. The cryptographic circuit of any of claims 5 to 7, wherein the one or more circuits is an S-box input circuit (304) comprising:

    one or more registers configured to store a real input value corresponding to said real substitution operation and N random input values; and one or more multiplexers (502) configured to select, for each substitution operation of each series, a value among said real input value and said N random input values to form an input to the memory circuit (302) storing said substitution table (S-BOXES).

9. The cryptographic circuit of claim 8, further comprising a selection circuit (504) configured to generate a selection signal for controlling the one or more multiplexers (502) to perform the selection of said value for each substitution operation.

10. The cryptographic circuit of any of claims 5 to 9, wherein the one or more circuits comprise one or more processing devices (602) under control of instructions stored in an instruction memory (606, 608) to select, for each substitution operation of each series, either said real input value or a random input value to form an input to the memory circuit (606) storing said substitution table (S-BOXES).

**Patentansprüche**

1. Ein Verfahren zum Implementieren einer Substitutionsoperation eines kryptographischen Algorithmus durch einen kryptographischen Schaltkreis (300, 600), wobei das Verfahren Folgendes aufweist:
Durchführen, für jede Substitutionsoperation des kryptographischen Algorithmus, einer Reihe von aufeinanderfolgenden Substitutionsoperationen, von denen:
eine reale Substitutionsoperation ist, die der Substitutionsoperation des kryptographischen Algorithmus entspricht; und eine oder mehrere andere Dummy-Substitutionsoperationen sind, wobei die Position der realen Substitutionsoperation unter der einen oder den mehreren Dummy-Substitutionsoperationen in jeder der Reihen zufällig ausgewählt wird, wobei das Durchführen jeder Reihe von aufeinanderfolgenden Substitutionsoperationen aufweist:

    Erzeugen eines ersten Zufallswertes (RAC);
    Laden eines realen Eingabewertes und m-1 zufälliger Eingabewerte, wobei m-1 eine positive ganze Zahl ist;
    Liefern des realen Eingabewerts und der m-1 zufälligen Eingabewerte bei aufeinanderfolgenden S-Box-Zugriffsoperationen an eine S-Box (302, 606), wobei: m die Anzahl der aufeinanderfolgenden Substitutionsoperationen ist, von denen m-1 Dummy-Substitutionsoperationen sind; m eine ganze Zahl ist, die für jede Serie zufällig ausgewählt wird; und die Reihenfolge, in der der reale Eingabewert in Bezug auf m-1 zufällige Eingabewerte geliefert wird, auf der Grundlage des ersten Zufallswerts (RAC) ausgewählt wird; und
    für jede Reihe von Substitutionsoperationen, Speichern eines Ausgabewerts (SB_OUT) jeder Substitutionsoperation und Auswählen, unter den gespeicherten Ausgabewerten, des Ausgabewerts, der der realen Substitutionsoperation entspricht, basierend auf dem ersten Zufallswert (RAC).

2. Verfahren nach Anspruch 1, wobei jede Substitutionsoperation Adressieren eines Speicherplatzes eines Speichers (302, 606) auf der Grundlage von Eingangsdaten (SB_IN) und das Lesen eines Datenwerts an dem Speicherplatz aufweist, um Ausgangsdaten (SB_OUT) bereitzustellen.

3. Verfahren nach Anspruch 1 oder 2, das ferner Erzeugen eines zweiten Zufallswertes (NFC) für eine erste Reihe von Substitutionsoperationen und die Verwendung des zweiten Zufallswertes (NFC) zur Auswahl der Anzahl m von Substitutionsoperationen in der ersten Reihe aufweist.

4. Ein nicht-transitorisches Speichermedium, das ein Computerprogramm speichert, das so konfiguriert ist, dass es, wenn es von einer Verarbeitungsvorrichtung (602) ausgeführt wird, das Verfahren nach einem der Ansprüche 1 bis 3 implementiert.

5. Eine kryptographische Schaltung, die Folgendes aufweist:

    eine Speicherschaltung (302, 606), die eine Substitutionstabelle (S-BOXES) zur Implementierung einer Substitutionsoperation eines kryptographischen Algorithmus speichert;
    eine oder mehrere Schaltungen (304, 602), die so konfiguriert sind, dass sie für jede Substitutionsoperation des kryptographischen Algorithmus eine Reihe von aufeinanderfolgenden Substitutionsoperationen unter Verwendung der Substitutionstabelle (S-BOX) durchführen, wobei jede Reihe von aufeinanderfolgenden Substitutionsoperationen Folgendes aufweist:

        eine echte Substitutionsoperation, die der Substitutionsoperation des kryptographischen Algorithmus entspricht; und
        eine oder mehrere Dummy-Substitutionsoperationen, wobei der eine oder die mehreren Schaltkreise so konfiguriert sind, dass sie die Position der realen Substitutionsoperation unter der einen oder den mehreren Dummy-Substitutionsoperationen in jeder der Serien zufällig auswählen; und

einen Zufallszahlengenerator (306, 612), der so konfiguriert ist, dass er für jede der Reihen einen ersten Zufallswert (RAC) zum zufälligen Auswählen der Position der realen Substitutionso- peration unter den Dummy-Substitutionsopera- tionen erzeugt, wobei die eine oder die mehreren Schaltungen (304, 602) so konfiguriert ist/sind, dass sie jede Reihe von aufeinander- folgenden Substitutionsoperationen durchfüh- ren durch:

Laden eines realen Eingabewerts und m-1 zufälliger Eingabewerte, wobei m-1 eine positive ganze Zahl ist; und Liefern des realen Eingabewerts und der m- 1 zufälligen Eingabewerte zu einer S-Box (302, 606) bei aufeinanderfolgenden S- Box-Zugriffsoperationen, wobei: m die An- zahl der aufeinanderfolgenden Substituti- onsoperationen ist, von denen m-1 Dummy- Substitutionsoperationen sind; m eine ganze Zahl ist, die für jede Serie zufällig ausgewählt wird; und die Reihenfolge, in der der reale Eingabewert in Bezug auf m-1 zufällige Eingabewerte zugeführt wird, auf der Grundlage des ersten Zufallswertes (RAC) ausgewählt wird; und

für jede Reihe von Substitutionsoperationen, Speichern eines Ausgabewerts (SB_OUT) je- der Substitutionsoperation und Auswählen, un- ter den gespeicherten Ausgabewerten, des Ausgabewerts, der der realen Substitutionsoperation entspricht, basierend auf dem ersten Zufallswert (RAC).

6. Kryptografische Schaltung nach Anspruch 5, wobei der Zufallszahlengenerator (306, 612) ferner so konfiguriert ist, dass er für jede der Serien einen zweiten Zufallswert (NFC) zur zufälligen Auswahl der Anzahl m von Substitutionsoperationen erzeugt.

7. Kryptografische Schaltung nach Anspruch 5 oder 6, die ferner einen Speicher (310, 608) zum Speichern eines Ergebnisses der Substitutionsoperationen jeder der Serien aufweist.

8. Kryptografische Schaltung nach einem der Ansprüche 5 bis 7, wobei die eine oder die mehreren Schaltungen eine S-Box-Eingangsschaltung (304) ist, die Folgendes aufweist:

ein oder mehrere Register, die so konfiguriert sind, dass sie einen realen Eingabewert, der der realen Substitutionsoperation entspricht, und N zufällige Eingabewerte speichern; und einen oder mehrere Multiplexer (502), die so konfiguriert sind, dass sie für jede Substitutionsoperation jeder Serie einen Wert aus dem realen Eingabewert und den N zufälligen Eingabewerten auswählen, um einen Eingang für die Speicherschaltung (302) zu bilden, die die Substitutionstabelle (S-BOXES) speichert.

9. Kryptografische Schaltung nach Anspruch 8, die ferner eine Auswahlschaltung (504) aufweist, die so konfiguriert ist, dass sie ein Auswahlsignal zur Steuerung des einen oder der mehreren Multiplexer (502) erzeugt, um die Auswahl des Wertes für jede Substitutionsoperation durchzuführen.

10. Kryptografische Schaltung nach einem der Ansprüche 5 bis 9, wobei die eine oder die mehreren Schal- tungen eine oder mehrere Verarbeitungsvorrichtun- gen (602) aufweisen, die von in einem Befehlsspeicher (606, 608) gespeicherten Befehlen gesteuert werden, um für jede Substitutionsoperation jeder Serie entweder den realen Eingabewert oder einen Zufallseingabewert auszuwählen, um eine Eingabe für die Speicherschaltung (606) zu bilden, die die Substitutionstabelle (S-BOXES) speichert.

**Revendications**

1. Procédé de mise en œuvre, par un circuit cryptographique (300, 600), d'une opération de substitution d'un algorithme cryptographique, le procédé comprenant :

l'exécution, pour chaque opération de substitution de l'algorithme cryptographique, d'une série d'opérations de substitution consécutives dont :

l'une est une opération de substitution réelle correspondant à l'opération de substitution de l'algorithme cryptographique ; et une ou plusieurs autres sont des opérations de substitution factices, dans lequel la position de l'opération de substitution réelle parmi lesdites une ou plusieurs opérations de substitution factices dans chacune desdites séries est sélectionnée aléatoirement, dans lequel l'exécution de chaque série d'opérations de substitution consécutives comprend :

la génération d'une première valeur aléatoire (RAC) ; le chargement d'une valeur d'entrée réelle et m- 1 valeurs d'entrée aléatoires, où m-1 est un entier positif ; la fourniture, pendant des opérations d'accès consécutives à une table de substitution, ladite valeur d'entrée réelle et les m-1 valeurs d'entrée aléatoires à une table de substitution (302, 606), dans lequel : m est le nombre desdites opérations de substitution consécutives dont m-1 sont des opérations de substitution factices ; m est un entier sélectionné aléatoirement pour chaque série ; et l'ordre dans lequel la valeur d'entrée réelle est fournie par rapport aux m-1 valeurs d'entrée aléatoires est sélectionnée sur la base de la première valeur aléatoire (RAC) ; et pour chaque série d'opérations de substitution, le stockage d'une valeur de sortie (SB_OUT) de chaque opération de substitution, et la sélection, parmi les valeurs de sortie stockées, de la valeur de sortie correspondant à ladite opération de substitution réelle sur la base de ladite première valeur aléatoire (RAC).

2. Procédé selon la revendication 1, dans lequel chaque opération de substitution comprend l'adressage d'un emplacement mémoire d'une mémoire (302, 606) sur la base de données d'entrée (SB_IN) et la lecture d'une valeur de données audit emplacement mémoire pour fournir des données de sortie (SB OUT).

3. Procédé selon l'une quelconque des revendications 1 ou 2, comprenant en outre la génération d'une deuxième valeur aléatoire (NFC) pour une première série d'opérations de substitution, et l'utilisation de la deuxième valeur aléatoire (NFC) pour sélectionner le nombre m d'opérations de substitution dans ladite première série.

4. Support de stockage non transitoire stockant un programme d'ordinateur configuré, lorsqu'il est exécuté par un dispositif de traitement (602), pour mettre en œuvre le procédé de l'une quelconque des revendications 1 à 3.

5. Circuit cryptographique comprenant :

   un circuit mémoire (302, 606) stockant une table de substitution (S-BOXES) pour mettre en œuvre une opération de substitution d'un algorithme cryptographique ;
   un ou plusieurs circuits (304, 602) configurés pour effectuer, pour chaque opération de substitution de l'algorithme cryptographique, une série d'opérations de substitution consécutives en utilisant ladite table de substitution (S-BOX), chaque série d'opérations de substitution consécutives comprenant :

      une opération de substitution réelle correspondant à l'opération de substitution de l'algorithme cryptographique ; et
      une ou plusieurs opérations de substitution factices, dans lequel les un ou plusieurs circuits sont configurés pour sélectionner aléatoirement la position de l'opération de substitution réelle parmi les une ou plusieurs opérations de substitution factices dans chacune desdites séries ; et

   un générateur de nombres aléatoires (306, 612) configuré pour générer, pour chacune desdites séries, une première valeur aléatoire (RAC) pour sélectionner aléatoirement la position de l'opération de substitution réelle parmi les opérations de substitution factices, dans lequel les un ou plusieurs circuits (304, 602) sont configurés pour effectuer chaque série d'opérations de substitution consécutives en :

      chargeant une valeur d'entrée réelle et m-1 valeurs d'entrée aléatoires, où m-1 est un entier positif ; et
      fournissant, pendant des opérations d'accès consécutives à une table de substitution, ladite valeur d'entrée réelle et les m-1 valeurs d'entrée aléatoires à une table de substitution (302, 606), dans lequel : m est le nombre desdites opérations de substitution consécutives dont m-1 sont des opérations de substitution factices ; m est un entier sélectionné aléatoirement pour chaque série ; et l'ordre dans lequel la valeur d'entrée réelle est fournie par rapport aux m-1 valeurs d'entrée aléatoires est sélectionnée sur la base de la première valeur aléatoire (RAC) ; et

   pour chaque série d'opérations de substitution, stockant une valeur de sortie (SB_OUT) de chaque opération de substitution, et sélectionnant, parmi les valeurs de sortie stockées, la valeur de sortie correspondant à ladite opération de substitution réelle sur la base de ladite première valeur aléatoire (RAC).

6. Circuit cryptographique selon la revendication 5, dans lequel le générateur de nombres aléatoires (306, 612) est en outre configuré pour générer, pour chacune desdites séries, une deuxième valeur aléatoire (NFC) pour sélectionner aléatoirement le nombre m d'opérations de substitution.

7. Circuit cryptographique selon la revendication 5 ou 6, comprenant en outre une mémoire (310, 608) pour stocker un résultat des opérations de substitution de chacune desdites séries.

8. Circuit cryptographique selon l'une quelconque des revendications 5 à 7, dans lequel les un ou plusieurs circuits est un circuit d'entrée de table de substitution (304) comprenant :

un ou plusieurs registres configurés pour stocker une valeur d'entrée réelle correspondant à ladite opération de substitution réelle et N valeurs d'entrée aléatoires ; et
un ou plusieurs multiplexeurs (502) configurés pour sélectionner, pour chaque opération de substitution de chaque série, une valeur parmi ladite valeur d'entrée réelle et lesdites N valeurs d'entrée aléatoires pour former une entrée vers le circuit mémoire (302) stockant ladite table de substitution (S-BOXES).

9. Circuit cryptographique selon la revendication 8, comprenant en outre un circuit de sélection (504) configuré pour générer un signal de sélection pour commander les un ou plusieurs multiplexeurs (502) pour effectuer la sélection de ladite valeur pour chaque opération de substitution.

10. Circuit cryptographique selon l'une quelconque des revendications 5 à 9, dans lequel les un ou plusieurs circuits comprennent un ou plusieurs dispositifs de traitement (602) sous le contrôle d'instructions stockées dans une mémoire d'instructions (606, 608) pour sélectionner, pour chaque opération de substitution de chaque série, soit ladite valeur d'entrée réelle, soit une valeur d'entrée aléatoire pour former une entrée vers le circuit de mémoire (606) stockant ladite table de substitution (S-BOXES).

MESSAGE          KEY

MESSAGE'

Fig 1

INPUT (b5...b0)                          S1

| 14 | 4 | 13 | 1 | 2 | 15 | 11 | 8 | 3 | 10 | 6 | 12 | 5 | 9 | 0 | 7 |
|----|----|----|----|----|----|----|----|----|----|----|----|----|----|----|----|
| 0 | 15 | 7 | 4 | 14 | 2 | 13 | 1 | 10 | 6 | 12 | 11 | 9 | 5 | 3 | 8 |
| 4 | 1 | 14 | 8 | 13 | 6 | 2 | 11 | 15 | 12 | 9 | 7 | 3 | 10 | 5 | 0 |
| 15 | 12 | 8 | 2 | 4 | 9 | 1 | 7 | 5 | 11 | 3 | 14 | 10 | 0 | 6 | 13 |

OUTPUT (b3...b0)

Fig 2

11

**Fig 3**

**Fig 4**

**Fig 5**

602

P

608

RAM

600

604

NVM 606

S-BOXES

I/O
INTERFACE

RNG

612

610

**Fig 6**

LOAD N RANDOM INPUT VALUES
AND ONE REAL INPUT VALUE

701

GENERATE NFC AND RAC

702

PERFORM $2^{NFC}$ S-BOX ACCESSES
WITH REAL ACCESS POSITIONED BASED
ON RAC AND STORE EACH RESULT

703

SELECT REAL RESULT BASED ON RAC

704

**Fig 7**

800

808

I/O

802

P

804

CRYPTO

806

MEM

**Fig 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 1851644
- FR 2985624 A1

- US 2009074181 A1

**Non-patent literature cited in the description**

- You Cannot Hide behind the Mask: Power Analysis on a Provably Secure S-Box Implementation. **PAN J et al.** INFORMATION SECURITY APPLICATIONS. SPRINGER BERLIN HEIDELBERG, 25 August 2009, 178-192